# EUROPEAN PATENT APPLICATION

(11) **EP 4 265 811 A1**
(43) Date of publication of application: **25.10.2023**
(21) Application number: 21911361.0
(22) Date of filing: 14.12.2021
(51) Int. Cl.: C23C 2/06, C23C 2/40, B05D 7/14, B23K 26/38

(54) **PLATED STEEL SHEET FOR EXTERIOR PANEL AND METHOD FOR MANUFACTURING SAME**

(30) Priority: 21.12.2020 KR 20200179911
(71) Applicant: POSCO Co., Ltd, Pohang-si, Gyeongsangbuk-do 37859 (KR)
(72) Inventor: JEONG, Hyunju, Incheon 22018 (KR); KIM, Wooseok, Incheon 21986 (KR); LEE, Kyunghwang, Incheon 21994 (KR); SEO, Hung-seok, Anyang-si Gyeonggi-do 14121 (KR)
(74) Representative: Meissner Bolte Partnerschaft mbB
(86) International application number: PCT/KR2021/018934
(87) International publication number: WO 2022/139294

(57) **Abstract**

Disclosed is a method for manufacturing a plated steel sheet for an exterior panel. The disclosed method for manufacturing the plated steel sheet comprises the steps of: preparing a plated steel sheet; cutting the plated steel sheet by a fiber laser; and painting the cut plated steel sheet with a liquid-state composition comprising fluorine.

## Description

### [Technical field]

The present invention relates to a plated steel sheet for an exterior building panel and a method of manufacturing the same, and more particularly, to a plated steel sheet for an exterior panel using a laser cutting method and a method of manufacturing the same.

### [Background Art]

Recently, in the field of interior and exterior building materials, development of exterior panels having various structures and shapes is being accelerated. The exterior panels are applied to environments exposed to pollutants, acid rain, air pollution, and ultraviolet rays, and thus require a high level of durability. Accordingly, a panel coated with an aluminum (Al) material is mainly used. However, Al has a melting point of about 660 °C, so that it cannot secure heat resistance.

### [Disclosure]

### [Technical Problem]

Embodiments of the present invention are directed to providing a plated steel sheet for an exterior panel having improved corrosion resistance and minimizing thermal effects during a laser cutting process to realize a complex shape of the plated steel sheet for an exterior panel, and a method of manufacturing the same.

### [Technical Solution]

A method of manufacturing a plated steel sheet for an exterior panel according to one embodiment of the present invention comprises: manufacturing a plated steel sheet; cutting the plated steel sheet with a fiber laser; and coating the cut plated steel sheet with a liquid composition comprising fluorine.

In addition, according to one embodiment of the present invention, an absorption wavelength band of the fiber laser may be 1 µm .

In addition, according to one embodiment of the present invention, a width of an edge portion exposed by etching a plating layer by the fiber laser may be 100 µm or less.

In addition, according to one embodiment of the present invention, the plated steel sheet may comprise a Zn-Mg-Al-based plating layer.

In addition, according to one embodiment of the present invention, the Zn-Al-Mg-based plating layer may comprise Al: 1.0 to 20.0%, Mg: 0.5 to 7%, a balance of Zn, and other unavoidable impurities, in weight percent.

In addition, according to one embodiment of the present invention, the Zn-Al-Mg-based plating layer may comprise Al: 1.0 to 11.0%, Mg: 1 to 5%, a balance of Zn, and other unavoidable impurities, in weight percent.

In a plated steel sheet for an exterior panel according to another embodiment of the present invention, a base steel sheet, a Zn-Al-Mg-based plating layer, and a coating layer are sequentially stacked and provided, and the Zn-Al-Mg-based plating layer comprises an edge portion from which the plating layer is removed by laser cutting.

In addition, according to one embodiment of the present invention, the coating layer provided on the edge portion may have a thickness greater than or equal to the thickness of the Zn-Al-Mg-based plating layer.

In addition, according to one embodiment of the present invention, the coating layer provided on the edge portion may have a thickness equal to or greater than half of the thickness of the coating layer provided on an upper surface of the Zn-Al-Mg-based plating layer.

In addition, according to one embodiment of the present invention, a width of the edge portion may be 100 µm or less.

In addition, according to an embodiment of the present invention, the Zn-Al-Mg-based plating layer may comprise Al: 1.0 to 20.0%, Mg: 0.5 to 7%, a balance of Zn, and other unavoidable impurities, in weight percent.

In addition, according to one embodiment of the present invention, the Zn-Al-Mg-based plating layer may comprise Al: 1.0 to 11.0%, Mg: 1 to 5%, a balance of Zn, and other unavoidable impurities, in weight percent.

In addition, according to one embodiment of the present invention, the Zn-Al-Mg-based plating layer may have a thickness of 10 to 30 µm.

In addition, according to one embodiment of the present invention, the coating layer may have a thickness greater than or equal to the thickness of the Zn-Al-Mg-based plating layer.

### [Advantageous Effects]

According to an embodiment of the present invention, it is possible to provide a plated steel sheet having improved corrosion resistance while minimizing thermal effects during a laser cutting process, so that it can be applied to a material for an exterior panel having a complex shape.

### [Description of Drawings]

FIG. 1 is a scanning electron microscope (SEM) photograph illustrating a case in which a Zn-Mg-Al-based plated steel sheet is cut by shearing, and a cross section thereof is photographed.
FIG. 2 is an SEM photograph illustrating a case in which a Zn-Mg-Al-based plated steel sheet is cut with a laser and a cross section thereof is photographed.
FIG. 3 is a photograph illustrating a cut surface of a plating layer after cutting a Zn-Mg-Al-based plated steel sheet using a 4 kW CO₂ laser.
FIG. 4 is a photograph illustrating a cut surface of a plating layer after cutting a Zn-Mg-Al-based plated steel sheet using a fiber laser.
FIG. 5 is a photograph of a plated steel sheet after cutting a Zn-Mg-Al-based plated steel sheet using a CO₂ laser and performing powder coating.
FIG. 6 is a photograph illustrating the results of a salt spray corrosion resistance evaluation for 72 hours after cutting a Zn-Mg-Al-based plated steel sheet using a CO₂ laser and performing powder coating.
FIG. 7 is a photograph of a plated steel sheet after cutting a Zn-Mg-Al-based plated steel sheet using a CO₂ laser and performing fluorine coating.
FIG. 8 is a photograph of a plated steel sheet after cutting a Zn-Mg-Al-based plated steel sheet using a fiber laser and performing fluorine coating.
FIG. 9 is a photograph illustrating the results of a salt spray corrosion resistance evaluation for 4,000 hours after cutting a Zn-Mg-Al-based plated steel sheet using a fiber laser and performing fluorine coating.

### [Best Mode for Implementation of the Invention]

A method of manufacturing a plated steel sheet for an exterior panel according to one embodiment of the present invention comprises: manufacturing a plated steel sheet; cutting the plated steel sheet with a fiber laser; and coating the cut plated steel sheet with a liquid composition comprising fluorine.

### [Modes of the Invention]

Hereinafter, embodiments of the present invention will be described in detail with reference to the accompanying drawings. The following embodiments are presented to sufficiently convey the spirit of the present invention to a person having ordinary knowledge in the technical field to which the present invention belongs. The present invention may be embodied in other forms without being limited to only the embodiments presented herein. In the drawings, in order to clarify the present invention, the illustration of parts irrelevant to the description may be omitted, and the size of components may be slightly exaggerated to aid understanding.

Throughout the specification, when a part is said to "comprise" a component, this means that the part may further comprise other components rather than excluding other components unless specifically stated to the contrary. Singular expressions comprise plural expressions unless the context clearly dictates otherwise.

Hereinafter, an embodiment of the present invention will be described in detail with reference to the accompanying drawings. First, a method of manufacturing a plated steel sheet for an exterior panel will be described, and then the plated steel sheet for an exterior panel will be described.

A method of manufacturing a plated steel sheet for an exterior panel according to one aspect of the present invention comprises: manufacturing a plated steel sheet; cutting the plated steel sheet with a fiber laser; and coating the cut plated steel sheet with a liquid coating composition comprising fluorine.

Research on Zn-plated steel sheets, Al-plated steel sheets, Ni-plated steel sheets, and the like, which adopted surface treatment methods such as painting and coating on carbon steel, is actively progressing.

Recently, Mg-Al-Zn alloy-plated steel sheets (Zn-Mg-Al-based plated steel sheets) having a self-healing effect have been used to secure durability and corrosion resistance of materials for interior/exterior building materials.

A Zn-Mg-Al-based plated steel sheet (POSCO magnesium aluminum alloy coating product, POSMAC) is a steel sheet on which a plating layer is formed with a plating solution comprising magnesium (Mg), aluminum (Al), and zinc (Zn), and may comprise 1 to 20% of Al, 0.5 to 7% of Mg, a balance of Zn, and other unavoidable impurities, in weight percent.

More specifically, the Zn-Mg-Al-based plated steel sheet may be a plated steel sheet which is plated with a plating solution comprising 1 to 4% by weight of Al, 1 to 4% by weight of Mg, a balance of Zn, and 0.1% by weight or less of impurities, and forms a Zn-Al-Mg plating layer. In addition, the Zn-Mg-Al-based plated steel sheet may comprise 18 to 20% by weight of Al, 5 to 7% by weight of Mg, a balance of Zn, and other unavoidable impurities; 11 to 13% by weight of Al, 4 to 6% by weight of Mg, a balance of Zn, and other unavoidable impurities; 1.5 to 3.5% by weight of Al, 2 to 4% by weight of Mg, a balance of Zn, and other unavoidable impurities; and 1 to 2.5% by weight of Al, 0.5 to 2.5% by weight of Mg, a balance of Zn, and other unavoidable impurities.

However, when a laser cutting method is adopted to manufacture the Zn-Mg-Al-based plated steel sheet in a complex shape or structure, a phenomenon in which the plating layer is lost (melted) due to thermal effects occurs, and there arises a problem that the corrosion resistance of a cut portion is inferior.

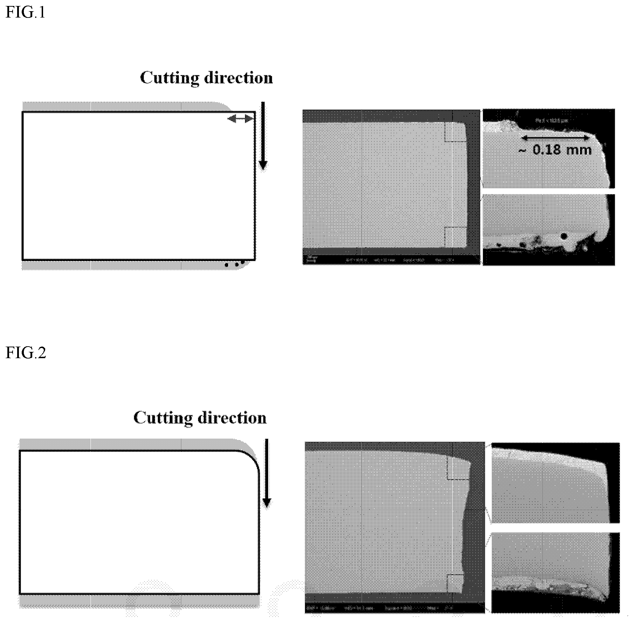

FIG. 1 is a scanning electron microscope (SEM) photograph illustrating a case in which a Zn-Mg-Al-based plated steel sheet is cut by shearing, and a cross section thereof is photographed, and FIG. 2 is an SEM photograph illustrating a case in which a Zn-Mg-Al-based plated steel sheet is cut with a laser and a cross section thereof is photographed.

When processing plated steel sheets, it is common to use a shear cutting method. On the other hand, the laser cutting method has high accuracy and is suitable for use in manufacturing a complex shape or structure.

Referring to FIG. 1, in the case of applying the shear cutting method to the Zn-Mg-Al-based plated steel sheet, there is a problem in that the dimensional accuracy of the plated steel sheet cannot be secured even though the plating layer is not lost.

In the case of applying the laser cutting method to the Zn-Mg-Al-based plated steel sheet, the dimensional accuracy of the steel sheet can be secured, but the plating layer is melted and lost due to the thermal effects of a laser during the cutting process. Specifically, referring to FIG. 2, it can be confirmed that an edge portion having a width of 0.2 mm or less is formed due to loss of the plating layer in a laser cut portion.

The loss of the plating layer described above reduces the self-healing effect of a cut surface, which is an inherent characteristic of the Zn-Mg-Al-based plated steel sheet, and deteriorates corrosion resistance around the cut surface. In addition, the loss of the plating layer causes non-coating in a subsequent coating process, so that the corrosion resistance required for a final product, the exterior panel, cannot be secured.

Accordingly, an attempt was made to derive a laser method capable of minimizing the loss of the plating layer of the plated steel sheet and securing the durability of the coating on the cut portion.

A CO₂ laser utilizes refraction using a lens, and adopts a beam transmission method, which causes a phenomenon in which an optical axis is distorted. Accordingly, a laser beam size changes according to a beam cutting position (beam transmission distance) of the CO₂ laser, and eventually causes a difference in thermal damage depending on the cutting position, resulting in a problem of variation in cutting quality.

Therefore, the present inventors introduced a fiber laser capable of securing uniform quality regardless of direction by solving the problem of optical axis misalignment by adopting a beam transmission method using a fiber from an oscillator to a cutting head.

In the case of the fiber laser, it has the advantage of not only having a smaller focal point than the CO₂ laser, but also having a higher absorption rate than the CO₂ laser (1 µm) while having an absorption wavelength band of 1 µm. Accordingly, since high energy density can be secured, it is possible to cut at a high speed even at a lower output than that of the CO₂ laser, thereby minimizing the thermal effects caused by the laser.

For example, when cutting a 1. 5mm-thick Zn-Mg-Al-based plated steel sheet, a 4 kW CO₂ laser can secure a cutting speed of about 4,700 mm/min.

In contrast, when a voltage of 1.5 to 2.5 kW is applied to the fiber laser, a cutting speed of up to 7,000 to 9,000 mm/min can be secured.

Accordingly, in the Zn-Mg-Al-based plated steel sheet, the width of the edge portion where the plating layer is etched by the fiber laser and the base steel sheet is exposed can be controlled to 100 µm or less.

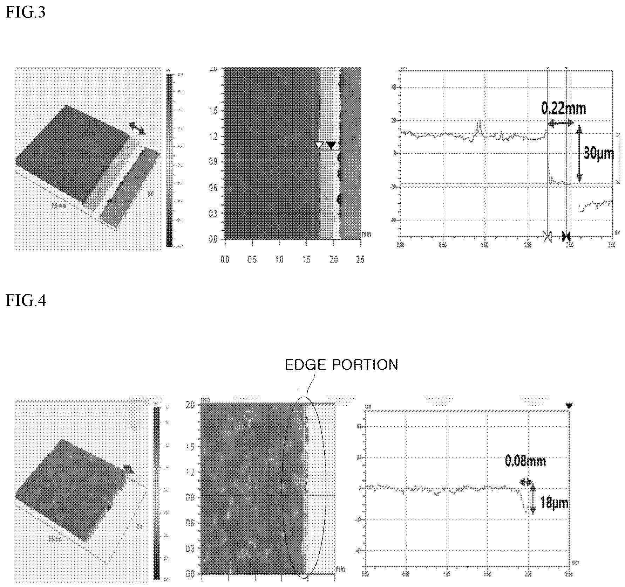

FIG. 3 is a photograph illustrating a cut surface of a plating layer after cutting a Zn-Mg-Al-based plated steel sheet using a 4 kW CO₂ laser, and FIG. 4 is a photograph illustrating a cut surface of a plating layer after cutting a Zn-Mg-Al-based plated steel sheet using a fiber laser.

Referring to FIG. 3, when a CO₂ laser, which is a universal cutting means, is adopted, it can be confirmed that an edge portion with a loss of about 0.22 mm in a width direction and about 30 µm in a depth direction is formed due to thermal effects.

Referring to FIG. 4, in the case of adopting the fiber laser, since an edge portion with a loss of about 0.08 mm in the width direction and about 18 µm in the depth direction is formed, it can be seen that loss of the plating layer is significantly reduced compared to the CO₂ laser.

Meanwhile, even when the loss of the plating layer is minimized by applying a fiber laser to the Zn-Mg-Al-based plated steel sheet, the plating layer is lost due to the thermal effects of the laser, and the edge portion where the base steel sheet is exposed is inevitably vulnerable to corrosion.

Therefore, in the present invention, not only the corrosion resistance of a laser edge portion is improved, but also the problem of generating a level difference is solved by introducing and coating a liquid coating.

In the case of using a powder coating in the form of a powder, it is difficult to coat the powder with relatively large particles to the edge portion. Therefore, it was intended to adopt a liquid coating that can be applied even where a level difference is severe compared to the powder coating.

According to the disclosed embodiment, it is possible to coat the cut plated steel sheet by utilizing a liquid coating composition comprising fluorine.

The liquid coating composition comprising fluorine (F) has excellent durability compared to the powder coating and can be applied even to areas with a level difference due to a relatively small particle size.

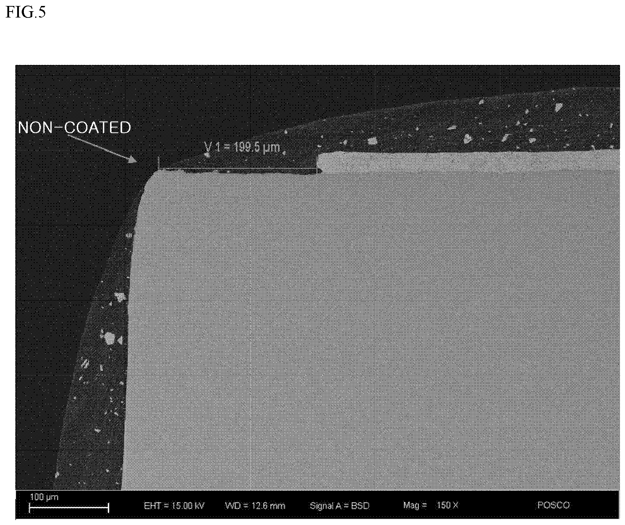

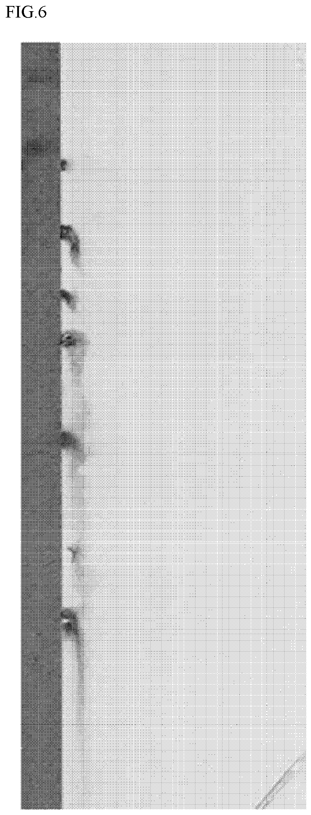

FIG. 5 is a photograph of a plated steel sheet after cutting a Zn-Mg-Al-based plated steel sheet using a CO₂ laser and performing powder coating, and FIG. 6 is a photograph illustrating the results of a salt spray corrosion resistance evaluation for 72 hours after cutting a Zn-Mg-Al-based plated steel sheet using a CO₂ laser and performing powder coating.

Referring to FIG. 5, it can be confirmed that an edge portion having a width of about 0.2 mm was formed by CO₂ laser cutting, and even when powder coating was adopted, the edge portion of a cut surface did not have a coated layer. Due to such an uncoated phenomenon, the corrosion resistance required for a final product, the exterior panel, cannot be secured.

Specifically, referring to FIG. 6, as a result of a salt spray test conducted according to ISO 9227 / ASTM B118 (5% NaCl, 35 °C), it can be confirmed that severe red rust has occurred in 72 hours.

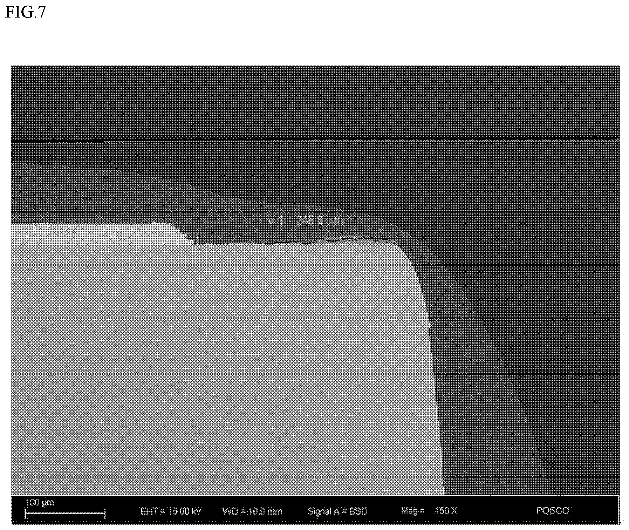

FIG. 7 is a photograph of a plated steel sheet after cutting a Zn-Mg-Al-based plated steel sheet using a CO₂ laser and performing fluorine coating.

Referring to FIG. 7, it can be confirmed that the edge portion of the plating layer formed by a CO₂ laser process can be coated with a liquid coating composition comprising fluorine. However, even in this case, it is not possible to secure a sufficient thickness of the coating layer at the edge portion, so that corrosion resistance requirements required for an exterior panel, which is a final product, cannot be satisfied.

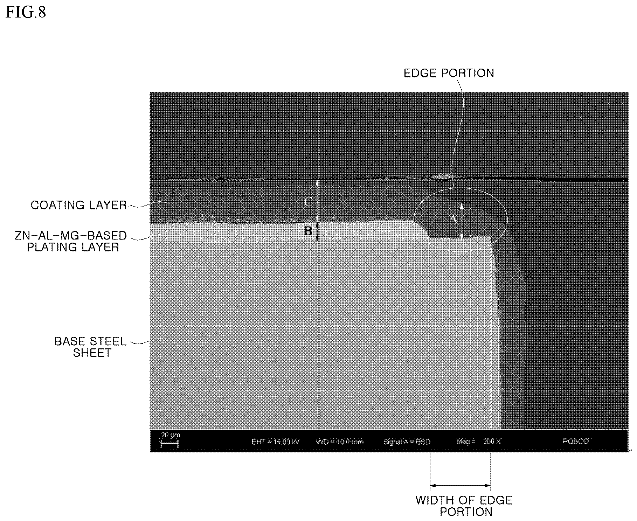

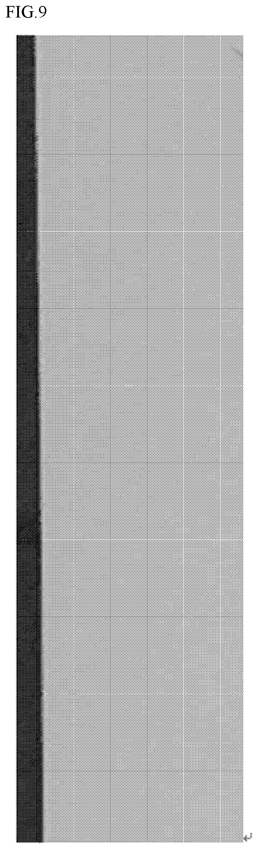

FIG. 8 is a photograph of a plated steel sheet after cutting a Zn-Mg-Al-based plated steel sheet using a fiber laser and performing fluorine coating, and FIG. 9 is a photograph illustrating the results of a salt spray corrosion resistance evaluation for 4,000 hours after cutting a Zn-Mg-Al-based plated steel sheet using a fiber laser and performing fluorine coating.

Referring to FIG. 8, it can be confirmed that cutting with a fiber laser not only reduces the loss of the plating layer compared to a CO₂ laser, but also secures corrosion resistance by forming a coating layer of sufficient thickness on an upper surface of the edge portion of the plating layer formed by a fiber laser process.

Specifically, referring to FIG. 9, as a result of a salt spray test conducted according to ISO 9227 / ASTM B 118 (5% NaCl, 35 °C), it can be confirmed that corrosion did not occur even after 4,000 hours.

Next, a plated steel sheet for an exterior panel according to another aspect of the present invention will be described.

In the plated steel sheet for an exterior panel according to another aspect of the present invention, a base steel sheet, a Zn-Al-Mg-based plating layer, and a coating layer are sequentially stacked and provided, and the Zn-Al-Mg-based plating layer comprises an edge portion from which the plating layer is removed by laser cutting. Descriptions of the Zn-Al-Mg-based plating layer and the edge portion from which the plating layer is removed by laser cutting are as described above.

A final plated steel sheet for an exterior panel may be manufactured by preparing a base steel sheet and performing a series of Zn-Al-Mg-based plating, cutting, and coating.

At this time, the coating layer provided on the edge portion may have a thickness greater than or equal to a thickness of the Zn-Al-Mg-based plating layer and also have a thickness equal to or greater than half of a thickness of the coating layer provided on an upper surface of the Zn-Al-Mg-based plating layer.

Referring to FIG. 8, the coating layer A provided on the edge portion may have a thickness greater than or equal to the thickness of the Zn-Al-Mg-based plating layer B. At the same time, the coating layer A provided on the edge portion may have a thickness equal to or greater than half of the thickness of the coating layer C provided on an upper surface of the Zn-Al-Mg-based plating layer.

In addition, in the Zn-Al-Mg-based plating layer, a width of the edge portion may be 100 µm or less.

According to the disclosed embodiments, by optimizing laser cutting conditions and coating conditions, thermal effects during laser cutting of the plated steel sheet for an exterior panel can be minimized and corrosion resistance can be improved.

In the foregoing, although exemplary embodiments of the present invention have been described, the present invention is not limited thereto, and those skilled in the art should be able to understand that various changes and modifications are possible without departing from the concept and scope of the claims described below.

### [Industrial Applicability]

According to one embodiment of the present invention, it is possible to provide a plated steel sheet for an exterior panel, having improved corrosion resistance while minimizing thermal effects during a laser cutting process to realize a complex shape of the plated steel sheet for an exterior panel, and a method of manufacturing the same.

## Claims

1. A method of manufacturing a plated steel sheet for an exterior panel, comprising:
manufacturing a plated steel sheet;
cutting the plated steel sheet with a fiber laser; and
coating the cut plated steel sheet with a liquid coating composition comprising fluorine.

2. The method of claim 1, wherein an absorption wavelength band of the fiber laser is 1 µm.

3. The method of claim 1, wherein a width of an edge portion exposed by etching a plating layer by the fiber laser is 100 µm or less.

4. The method of claim 1, wherein the plated steel sheet comprises a Zn-Mg-Al-based plating layer.

5. The method of claim 1, wherein a Zn-Al-Mg-based plating layer comprises Al: 1.0 to 20.0%, Mg: 0.5 to 7%, a balance of Zn, and other unavoidable impurities, in weight percent.

6. The method of claim 1, wherein a Zn-Al-Mg-based plating layer comprises Al: 1.0 to 11.0%, Mg: 1 to 5%, a balance of Zn, and other unavoidable impurities, in weight percent.

7. A plated steel sheet for an exterior panel, wherein a base steel sheet, a Zn-Al-Mg-based plating layer, and a coating layer are sequentially stacked and provided, and
the Zn-Al-Mg-based plating layer comprises an edge portion from which the plating layer is removed by laser cutting.

8. The plated steel sheet of claim 7, wherein the coating layer provided on the edge portion has a thickness greater than or equal to a thickness of the Zn-Al-Mg-based plating layer.

9. The plated steel sheet of claim 7, wherein the coating layer provided on the edge portion has a thickness equal to or greater than half of a thickness of the coating layer provided on an upper surface of the Zn-Al-Mg-based plating layer.

10. The plated steel sheet of claim 7, wherein the edge portion has a width of 100 µm or less.

11. The plated steel sheet of claim 7, wherein the Zn-Al-Mg-based plating layer comprises Al: 1.0 to 20.0%, Mg: 0.5 to 7%, a balance of Zn, and other unavoidable impurities, in weight percent.

12. The plated steel sheet of claim 7, wherein the Zn-Al-Mg-based plating layer comprises Al: 1.0 to 11.0%, Mg: 1 to 5%, a balance of Zn, and other unavoidable impurities, in weight percent.

13. The plated steel sheet of claim 7, wherein the Zn-Al-Mg-based plating layer has a thickness of 10 to 30 µm.

14. The plated steel sheet of claim 7, wherein the coating layer has a thickness greater than or equal to a thickness of the Zn-Al-Mg-based plating layer.
